# EUROPÄISCHE PATENTANMELDUNG

(11) **EP 1 662 421 A1**
(43) Veröffentlichungstag der Anmeldung: **31.05.2006**
(21) Anmeldenummer: 04028258.4
(22) Anmeldetag: 29.11.2004
(51) Int. Cl.: G06K 7/00, G06K 19/07

(54) **Verfahren zur funkgestützen Datenübertragung zwischen einem Schreib-/Lesegerät und mindestens einem mobilen Datenspeicher**

(71) Anmelder: SIEMENS AKTIENGESELLSCHAFT, 80333 München (DE)
(72) Erfinder: Konrad, Hilmar, 91058 Erlangen (DE)

(57) **Zusammenfassung**

Bei dem Verfahren werden Daten (LD, SD) zwischen einem Schreib-/Lesegerät (SLG) und mobilen Datenspeichern (T1-T3) übertragen, wobei die Daten mittels eines Kodierverfahrens in einen Datenstrom kodiert werden und dann dieser mittels eines Modulationsverfahrens in einem Sendespektrum (S1-S3) übertragen wird. Es wird der jeweilige Abstand (A1-A6) zwischen dem Schreib-/Lesegerät und einem mobilen Datenspeicher ermittelt, und dann bei einer Abnahme bzw. Zunahme des jeweiligen Abstands eine aktuelle Bandbreite (B1-B3) des Sendespektrums erhöht bzw. verringert. Dazu wird das Kodierverfahren geändert und/oder die Taktrate des kodierten Datenstroms erhöht bzw. verringert wird, und/oder die Modulationsart geändert. Alternativ kann anstelle der Abstandsmessung eine Pegelmessung (PS1-PS3, PC1-PC3) insbesondere einer Trägerfrequenz (fT, fH) durchgeführt werden. Der große Vorteil ist, dass während einer Vorbeibewegung eines mobilen Datenspeichers an einem Schreib-/Lesegerät eine maximal mögliche Datenübertragungsrate eingestellt werden kann, ohne funktechnische Grenzwerte zu verletzen. Dadurch ist die Übertragung einer höheren Datenmenge in der gleichen Zeit bzw. einer vorgegebenen Datenmenge in einer kürzeren Zeit möglich.

## Beschreibung

Die Erfindung betrifft ein Verfahren zur funkgestützten Datenübertragung zwischen einem Schreib-/Lesegerät und mindestens einem mobilen Datenspeicher, wobei die Daten mittels eines Kodierverfahrens in einen Datenstrom kodiert werden und wobei der Datenstrom mittels eines Modulationsverfahrens in einem Sendespektrum übertragen wird. Die Erfindung betrifft weiterhin eine Verwendung des Verfahrens in einem Identifikationssystem, insbesondere in einem gebührenfreien ISM-Frequenzband für industrielle, wissenschaftliche und medizinische Anwendungen.

Weiterhin betrifft die Erfindung ein Schreib-/Lesegerät sowie einen mobilen Datenspeicher, welche Antennen, Datensende- und/oder Datenempfangseinheiten sowie Steuereinheiten als Mittel zur Durchführung des Verfahrens aufweisen.

Schließlich betrifft die Erfindung ein Identifikationssystem, welches ein derartiges Schreib-/Lesegerät sowie mindestens einen derartigen mobilen Datenspeicher aufweist.

Als Stand der Technik sind Identifikationssysteme bekannt, die zumindest ein stationäres Schreib-/Lesegerät enthalten, welche Daten mit mobilen Datenspeichern über eine in der Regel auf Funk basierende Datenübertragungsstrecke berührungslos austauscht. Derartige Systeme werden in technischen Einrichtungen eingesetzt, wo eine Vielzahl von Objekten bzw. Gütern möglichst schnell und frei bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Einrichtung, z.B. einer Fertigungsanlage, etwa die Art und den Zustand der in einer räumlichen Nähe zu diesen Stellen aktuell befindlichen Objekte schnell und ungehindert zu erfassen. Hierzu werden einerseits die Objekte mit mobilen Datenspeichern versehen, welche z.B. die Art und den aktuellen Zustand des Objektes kennzeichnende Daten enthalten. Andererseits sind an den bestimmten Stellen der Einrichtung Schreib-/Lesegeräte platziert und häufig mit zentralen Datenverarbeitungseinrichtungen verbunden.

Werden z.B. in einem Produktionsablauf solche Objekte in die räumliche Nähe einer ausgewählten Stelle befördert, so kann das dort angeordnete, stationäre Schreib-/Lesegerät auf berührungslose Weise die Daten in den mobilen Datenspeichern der in ihrem Erfassungsbereich aktuell befindlichen Objekte erfassen und gegebenenfalls verändern. Die Daten können dann mit Hilfe einer übergeordneten zentralen Datenverarbeitungseinrichtung zu unterschiedlichen Zwecken ausgewertet werden, z.B. zur Verfolgung des Laufes der mit den mobilen Datenspeichern versehenen Objekte und zur davon abhängigen Steuerung von Betriebsmitteln der jeweiligen technischen Einrichtung. Identifikationssysteme, welche dann zugleich mehrere in einem Erfassungsbereich befindliche mobile Datenspeicher behandeln können, werden auch als Multitag-Identifikationssysteme bezeichnet.

Die am häufigsten verwendeten Identifikationssysteme basieren auf einer induktiv gekoppelten Datenübertragung oder auf einer funkgestützten Datenübertragung mittels elektromagnetischer Wellen, insbesondere im Mikrowellenbereich.

Induktiv koppelbare mobile Datenspeicher können sogar zeitlich unbegrenzt eingesetzt werden, da auf eine Integration von chemischen Energiespeichern, wie z.B. Batterien, verzichtet werden kann. Die notwendige elektrische Energie wird daher extern, d.h. einem vom Schreib-/Lesegerät stammendem elektrischen oder magnetischen Feld, kontaktlos entnommen. Zur Kommunikation des Schreib-/Lesegeräts mit derartigen mobilen Datenspeichern sind daher geeignete Übertragungs- und Kodierungsverfahren notwendig. Zum einen sind zur Übertragung von Daten i.d.R. nur bestimmte Frequenzbänder freigegeben, z.B. die bereits o.g. ISM-Frequenzbänder (Industrial, Scientific & Medical) für industrielle, wissenschaftliche und medizinische Anwendungen. Dabei lässt die vorgeschriebene zulässige Feldstärke oder abgestrahlte Leistung für jeden Frequenzbereich nur eine maximale Datenrate zu. Zum anderen ist auch eine energetische Versorgung der Elektronik im mobilen Datenspeicher durch die Übertragungs- und Kodierungsverfahren sicherzustellen.

Verfahren dieser Art erlauben eine durchgehende Energieversorgung der Datenspeicherelektronik, indem zur Energieübertragung die mit den zu sendenden Daten modulierte Trägerfrequenz übertragen. Umgekehrt erfolgt z.B. eine Datenübertragung vom mobilen Datenspeicher zum Schreib-/Lesegerät mittels einer sog. Belastungsmodulation. Dabei bedämpft der mobile Datenspeicher das induzierende magnetische Feld. Entsprechend den o.g. Normen kann die Belastungsmodulation je nach gewählter Übertragungsart für einen Zeitschlitz kontinuierlich oder mit trägerfrequenzmoduliert erfolgen.

Solche Verfahren sind z.B. nach der Norm ISO/IEC 15693 Part 2 "Air Interface and Initialization" oder nach der Norm 14443 zum Betrieb in einem ISM-Frequenzband bekannt.

Ein Beispiel für ein funkgestütztes Identifikationssystem auf Mikrowellenbasis ist im ISO-18000 Standard mit dem Titel "Radio Frequency Identification Standard for Item Management - Air Interface" beschrieben.

In der Norm ist vorgesehen, dass durch das Schreib-/Lesegerät auch eine Abfrage auf Vorhandensein eines mobilen Datenspeichers im Erfassungsbereich, d.h. in einem ausgesandten Abfragefeld, erfolgen kann. Dazu sendet das Schreib-/Lesegerät ein unmoduliertes Trägersignal mit einer vorgebbaren Backscatter-Frequenz aus. Dieses Signal kann passiv von einem im Erfassungsbereich befindlichen mobilen Datenspeicher z.B. durch sog. "Backscattering" zum Schreib-/Lesegerät zurückgesendet werden. Durch die passive und nahezu leistungslose Modulation der Antennenimpedanz ist es möglich, dass ein derartiger mobiler Datenspeicher mit einer integrierten Batterie über viele Jahre hinweg betrieben werden kann.

Während einer Datenübertragung zwischen dem Schreib-/Lesegerät und mindestens einem mobilen Datenspeicher ist der fließende Datenstrom nicht kontinuierlich, sondern zeitlich gerastert ist. Hierzu kann der Datenstrom des Schreib-/Lesegeräts zunächst in gleichlange Rahmen unterteilt, jeder Rahmen des Datenstroms in gleichlange Teilrahmen und jeder Teilrahmen in gleichlange Zeitschlitze unterteilt sein. Die Aufteilung des Datenstromes in Rahmen, Teilrahmen und Zeitschlitze wird dann von dem Schreib-/Lesegerät allen mobilen Datenspeichern eines Systems in Form regelmäßig wiederholter Signalisierungsdaten mitgeteilt.

Auf Basis des o.g. Standards ISO 18000-4 wird bei einer sog. getrennten Uplink- und Downlink-Datenübertragung, d.h. bei einer Schreib- und Leseübertragung, vom Schreib-/Lesegerät zum mobilen Datenspeicher sowie vom mobilen Datenspeicher zum Schreib-/Lesegerät ein sog. Time-Division-Duplex-Verfahren (TDD) verwendet. Bei einer Zuordnung der einzelnen Zeitschlitze oder Teilrahmen zu unterschiedlichen mobilen Datenspeichern können kontinuierlich Daten zwischen einem Schreib-/Lesegerät und einer größeren Anzahl von mobilen Datenspeichern ausgetauscht werden. Ein solches Verfahren kann auch als Time-Division-Multiple Access-Verfahren (TDMA) bezeichnet werden.

Für die induktiv gekoppelte Datenübertragung sowie für die Datenübertragung auf Basis von Mikrowellen gilt, dass mit zunehmendem Abstand zwischen dem Schreib-/Lesegerät und dem jeweiligen mobilen Datenspeicher die magnetische bzw. die elektrische Feldstärke, welche für einen Empfang maßgeblich ist, abnimmt. Im ersten Fall nimmt die magnetische Feldstärke zumindest linear mit dem Abstand ab. Im zweiten kann die elektrische Feldstärke sogar bis zur 3. Potenz abnehmen. Maßgeblich ist hierbei, in wie weit die elektromagnetischen Wellen senderseitig gerichtet abgestrahlt werden.

Bei Backscatter-Systemen sendet das Schreib-/Lesegerät ein Abfragesignal aus, welches - wie beschrieben - erheblich mit dem Abstand zu einem abzufragenden mobilen Datenspeicher abnimmt. Dieses beim mobilen Datenspeicher eintreffende Signal wird vom jeweiligen mobilen Datenspeicher mit Daten moduliert. Demzufolge ist der mobile Datenspeicher ein passiver Sender, von welchem aus das reflektierte und modulierte Signal u.a. zum abfragenden Schreib-/Lesegerät zurückgeworfen wird. Auf diesem Weg zurück nimmt wiederum die elektrische Feldstärke erheblich ab, so dass letztlich beim Schreib-/Lesegerät nur ein Bruchteil des ursprünglich gesendeten Signals ankommt. In Summe nimmt die Empfangsfeldstärke beim Schreib-/Lesegerät bedingt durch den doppelten Weg zum mobilen Datenspeicher und zurück im Bereich der 2. bis 4. Potenz bezogen auf den Abstand zwischen Schreib-/Lesegerät und mobilem Datenspeicher ab. Maßgeblich ist auch hier die Sende- und Empfangscharakteristik, insbesondere die Charakteristik der Sende- und Empfangsantennen des Schreib-/Lesegeräts und des mobilen Datenspeichers sowie deren Ausrichtung zueinander.

Während der Vorbeibewegung des mobilen Datenträgers an einem Schreib-/Lesegerät können Daten berührungslos ausgetauscht werden. Die Datenübertragung kann, wie eingangs beschrieben, über induktive Kopplung, wie z.B. induktiv gekoppelt bei einer Frequenz von 13,56 MHz, oder über elektromagnetische Wellen erfolgen, wie z.B. bei einer Frequenz von 2,45 GHz bei Systemen auf Mikrowellenbasis. Einschlägige Normen bzw. Regulierungsvorschriften, wie z.B. die ETS 300 330, die ETSI EN 300 440-1 (beide für Europa), der FCC Part 15, Section 15.209 (für die USA) oder die CEPT REC 70-03 (international) legen diesbezüglich Feldstärkegrenzwerte, Sendeleistungen sowie die spektrale Verteilung von Seitenbändern fest, welche sich um eine Trägerfrequenz ausbilden.

Im Allgemeinen lässt sich festhalten, dass die in einem erlaubten ISM-Frequenzband aufintegrierte spektrale Energiedichte bzw. die Sendeleistung aller Frequenzen, insbesondere die eines Schreib-/Lesegeräts, im Mittel etwa gleich sein soll. Der Nachweis kann z.B. dadurch erfolgen, dass das zu untersuchende Sendespektrum mit einer Zeitkonstante von 0,5 s gemessen wird, um die dynamischen spektralen Veränderungen auszumitteln.

Zudem legen z.B. die o.g nationalen sowie internationalen Vorschriften Grenzwerte für eine maximale elektrische bzw. magnetische Feldstärke fest. Dies bedeutet z.B. für ein sog. "Long Range"-Identifikationssystem mit Übertragungsreichweiten von bis zu 10 Metern, dass eine vom Schreib-/Lesegerät ausgesandte Trägerfrequenz einen vergleichsweise hohen Sendepegel aufweisen muss, um einen relativ weit entfernt gelegenen mobilen Datenspeicher erreichen zu können. Da die Sendeleistung für den Träger die o.g. vorgegebene begrenzte spektrale Energiedichte nahezu ausschöpft, verbleibt nur noch eine geringe Datenübertragungsrate. Im umgekehrten Falle ergibt sich für ein sog. "Short Range"-Identifikationssystem bei kurzen Übertragungsreichweiten von ca. 1 bis 2 Metern eine vergleichsweise hohe Datenübertragungsrate.

Zur Übertragung einer bestimmten Datenmenge zwischen einem mobilen Datenspeicher und einem Schreib-/Lesegerät darf allerdings eine Mindestverweildauer im Erfassungsbereich des Schreib-/Lesegeräts nicht unterschritten werden, um bei der vorbestimmten Datenübertragungsrate die vorgesehene Datenmenge übertragen zu können. Dies bedeutet, dass eine Maximalgeschwindigkeit des Datenträgers nicht überschritten werden darf. Mit Datenmenge ist dabei insbesondere die Datenmenge zu verstehen, welche letztendlich als Bit- oder Bytefolge zur weiteren Datenverarbeitung zur Verfügung steht.

Damit ist das Problem verbunden, dass mit zunehmendem Automatisierungsgrad und mit zunehmend komplexeren Aufgabenstellungen die Verweildauer eines mobilen Datenspeichers im Erfassungsbereich des Schreib-/Lesegeräts nicht mehr ausreicht, um die vom einen Kunden geforderte höhere Datenmenge für einen Fertigungsprozess austauschen zu können.

Ein weiteres Problem ist, dass mit Steigerung der Fertigungsgeschwindigkeit zur Produktivitätssteigerung die o.g. Maximalgeschwindigkeit für die Vorbeibewegung des mobilen Datenträgers überschritten wird. Dadurch kann aber eine vorgesehene Datenmenge nicht mehr ausgetauscht werden.

Zur Lösung des Problems kann der Erfassungsbereich, wie z.B. durch den Einsatz von mehreren hintereinander geschalteten Schreib-/Lesegeräte "verbreitert" werden. Dies ist allerdings aufwendig und teuer.

Es ist somit eine Aufgabe der Erfindung, ein Datenübertragungsverfahren anzugeben, welches die Übertragung einer höheren Datenmenge zwischen einem mobilen Datenspeicher und einem Schreib-/Lesegerät i.Vgl. zu einem herkömmlichen mobilen Datenspeicher erlaubt, der an einem Schreib-/Lesegerät vorbeibewegt wird. Es ist eine weitere Aufgabe der Erfindung, eine geeignete Verwendung des erfindungsgemäßen Verfahrens sowie geeignete Vorrichtungen zur Durchführung des Verfahrens anzugeben.

Die Aufgabe wird gelöst mit einem Verfahren zur Übertragung von Daten zwischen einem Schreib-/Lesegerät und mindestens einem mobilen Datenspeicher in einem Identifikationssystem, bei welchem die Daten mittels eines Kodierverfahrens in einen Datenstrom kodiert werden und wobei dann der Datenstrom mittels eines Modulationsverfahrens in einem Sendespektrum übertragen werden. Dabei wird der jeweilige Abstand zwischen dem Schreib-/Lesegerät und dem zumindest einen mobilen Datenspeicher ermittelt, und dann bei einer Abnahme bzw. Zunahme des jeweiligen Abstands eine aktuelle Bandbreite des Sendespektrums erhöht bzw. verringert wird.

Die Aufgabe wird weiterhin gelöst durch ein Datenübertragungsverfahren, bei dem anstelle der Abstandsmessung das Sendespektrum empfangen und ein zugehöriger Empfangspegel ermittelt wird, und dann bei einer Zunahme bzw. Abnahme des jeweiligen Empfangspegels eine aktuelle Bandbreite des Sendespektrums erhöht bzw. verringert wird.

Der große Vorteil der Erfindung ist, dass während einer Vorbeibewegung eines mobilen Datenspeichers an einem Schreib-/Lesegerät eine maximal mögliche Datenübertragungsrate eingestellt werden kann, ohne die eingangs genannten funktechnischen Grenzwerte zu verletzen. Dadurch lässt sich in der gleichen Zeit eine höhere Datenmenge übertragen oder eine vorgegebene Datenmenge in einer kürzeren Zeit übertragen.

Nähert sich ein mobiler Datenspeicher einem Schreib-/Lesegerät, so wird dieser in einem relativ großen Abstand, d.h. im Erfassungsbereich des Schreib-/Lesegeräts, erfasst. Zunächst wird für die Datenübertragung senderseitig eine kleine Bandbreite eingestellt, um die für diesen Abstand notwendige Sendeleistung möglichst klein zu halten. Mit dieser kleinen Bandbreite geht eine entsprechend geringe Datenübertragungsrate einher. Je nach Übertragungsrichtung ist dabei das Schreib-/Lesegerät und/oder der mobile Datenspeicher der Sender. Mit zunehmender Annäherung wird gemäß der Erfindung die Bandbreite für die Datenübertragung vergrößert und entsprechend die Sendeleistung erhöht, so dass mit der Bandbreite auch die Datenübertragungsrate zunimmt. Entfernt sich der mobile Datenspeicher ausgehend vom Punkt der maximalen Annäherung, so wird in umgekehrter Weise die Bandbreite wieder verringert und in korrespondierender Weise die Datenübertragung verkleinert, bis der mobile Datenspeicher den Erfassungsbereich des Schreib-/Lesegeräts verlässt. Typischerweise beträgt der Auslese- und/oder Schreibvorgang eines mobilen Datenspeichers weniger als einer Sekunde, insbesondere nur einen Bruchteil einer Sekunde. Gemittelt und in Summe ist somit eine größere Datenmenge in Bezug auf die Sendeleistung und i. Vgl. zu einem herkömmlichen mobilen Datenspeicher mit konstanter Datenübertragungsrate übertragbar.

Die aktuelle Bandbreite des Sendespektrums kann beispielsweise dadurch erhöht bzw. verringert werden, indem das Kodierverfahren für die Kodierung der Daten in den Datenstrom geändert wird. So kann die Kodierung innerhalb eines vorgegebenen Zeitschlitzrasters derart geändert werden, dass z.B. die 8 Bit eines zu übertragenden Bytes in 8 Zeitschlitze kodiert werden. Diese Kodierung führt über die nachfolgende Modulation zu einem Sendespektrum mit einer relativ großen Bandbreite. Im Gegensatz dazu kann die Kodierung der o.g. 8 Bits so erfolgen, dass entsprechend der Wertigkeit von 8 Bit eine von möglichen 256 Positionen innerhalb von 256 Zeitschlitzen kodiert werden. Diese Kodierung führt über die nachfolgende Modulation zu einem Sendespektrum mit einer relativ kleinen Bandbreite.

Es kann auch die Taktrate des kodierten Datenstroms erhöht bzw. verringert wird. Im Sendespektrum hat dies zu Folge, dass die Bandbreite vergrößert bzw. verkleinert wird.

Weiterhin kann die Modulationsart für die Modulation des Datenstroms geändert werden. Mögliche Modulationsarten sind z.B. eine Amplitudenmodulation mit einem variablen Modulationsgrad, eine Phasenmodulation, eine Vierquadrantenmodulation. So führt beispielsweise eine Erhöhung des Modulationsgrades bei der o.g. Amplitudenmodulation zu einer Vergrößerung der Bandbreite. Je nach Wahl des Modulationsverfahrens kann eine höhere Störfestigkeit für die Datenübertragung erreicht werden. Die Auswahl des geeigneten Modulationsverfahrens kann z.B. über eine Auswertung des Empfangspegels- und/oder der Empfangsfeldstärke sowie deren Qualität erfolgen. Ein Maß für die Qualität ist z.B. das Signal/Rauschverhältnis oder der verhältnismäßige Anteil von spektralen Störpegeln, welche innerhalb des auszuwertenden Frequenzbereichs vorhanden sein können.

In einer Verfahrensvariante wird zugleich ein Sendepegel des Sendespektrums bei einer Vergrößerung der aktuellen Bandbreite abgesenkt und bei einer Verkleinerung angehoben. Dadurch kann der Erfassungsbereich eines Schreib-/Lesegeräts vergrößert werden, indem die Bandbreite des Sendespektrums verkleinert, zugleich aber die Sendeleistung erhöht wird. Durch die Vergrößerung des Erfassungsbereichs wird vorteilhaft der mögliche Übertragungszeitraum und somit die zwischen einem Schreib-/Lesegerät und einem mobilen Datenspeicher übertragbare Datenmenge erhöht.

In einer besonders vorteilhaften Verfahrensvariante wird der Sendepegel derart angehoben und abgesenkt, dass die Sendeleistung des Sendespektrums annähernd gleich bleibt. Definitionsgemäß ist die gesamte Sendeleistung bestimmt durch das Integral über die jeweiligen spektralen Sendeleistungen. Durch das erfindungsgemäße Einstellen des Sendepegels in Abhängigkeit von der aktuell eingestellten Sendebandbreite wird erreicht, dass nationale sowie internationale funktechnische Vorschriften eingehalten werden können. Insbesondere wird die Sendeleistung des Sendespektrums auf einen vorgebbaren maximalen Wert begrenzt wird, der mit einem funktechnischen Grenzwert korrespondiert.

Dadurch ist es vorteilhaft möglich, dass zum Erreichen eines vom Schreib-/Lesegeräts weit entfernten mobilen Datenspeichers der größte Teil der Sendeleistung in einem schmalbandigen Sendespektrum vorliegt, so dass noch eine relativ hohe Empfangsfeldstärke bei dem weit entfernten mobilen Datenspeicher "ankommt". In diesem Falle fungiert der mobile Datenspeicher als "Long-Range"-Datenspeicher, wenn auch die Datenübertragungsrate noch verhältnismäßig klein ist. Mit abnehmendem Abstand wird der Sendepegel abgesenkt und zugleich die Bandbreite des Sendespektrums verbreitert, wobei die Sendeleistung in etwa gleich bleibt. Der mobile Datenspeicher fungiert dann als "Short-Range"-Datenspeicher. Ist der mobile Datenspeicher in unmittelbarer Nähe zum Schreib-/Lesegerät, so könnte dann theoretisch die Bandbreite derart aufgeweitet und der Sendepegel derart abgesenkt werden, dass die Datenübertragungsrate i.Vgl. zu einem herkömmlichen "Short-Range"-Datenspeicher ein Vielfaches betragen kann. Maßgeblich sind hier die funktechnischen Grenzen bezüglich der zulässigen Frequenzbänder sowie die technische Leistungsfähigkeit der Sende- und Empfängerschaltungen im Schreib-/Lesegerät und im mobilen Datenspeicher.

In einer weiteren Verfahrensvariante wird zumindest ein Trägersignal zusammen mit dem Sendespektrum mit der zugehörigen Bandbreite gesendet, wobei dann ein Trägerpegel des Trägersignals und der Sendepegel des Sendespektrums derart abgesenkt bzw. angehoben werden und die jeweilige Bandbreite derart vergrößert bzw. verkleinert wird, so dass die gesamte Sendeleistung des Trägersignals und des Sendespektrums annähernd gleich bleibt. Insbesondere wird die Sendeleistung des Trägersignals und des Sendespektrums auf einen vorgebbaren maximalen Wert begrenzt wird, um funktechnische Grenzwerte einzuhalten. Das Trägersignal dient z.B. bei induktiv gekoppelten Systemen u.a. der Energieübertragung vom Schreib-/Lesegerät zum mobilen Datenspeicher zu dessen Energieversorgung. Bei mikrowellenbasierten Systemen dient das Trägersignal vornehmlich zur Detektion eines mobilen Datenspeichers, insbesondere bei Backscatter-Identifikationssystemen. Das Trägersignal weist dabei üblicherweise eine vorgebbare Trägerfrequenz auf.

Weiterhin kann gemäß einer weiteren Verfahrensvariante das Trägersignal mit einem Datenstrom moduliert werden, so dass Daten in einem zum Trägersignal benachbartem Sendespektrum übertragen werden können. Insbesondere moduliert ein mobiler Datenspeicher ein vom Schreib-/Lesegerät stammendes Trägersignal mit Lesedaten auf Basis eines Backscatter-Verfahrens. Dabei bilden sich durch die Modulation des Trägersignals Seitenbänder aus, welches sich in Nachbarschaft zum Trägersignal ausbilden. Das Sendespektrum weist dabei als Bandbreite die Teilbandbreiten der zwei Seitenbänder auf, die das Trägersignal umgeben. Wie bereits eingangs beschrieben, ist die Bandbreite eines solchen Sendespektrums mittels des Kodierverfahrens für die Kodierung der Daten in den Datenstrom, mittels der Taktrate des kodierten Datenstroms sowie mittels der Modulationsart für die Modulation des Datenstroms einstellbar änderbar.

Zur Datenübertragung in dem Identifikationssystem können eine Vielzahl von Übertragungskanälen insbesondere mit einer gleichen Kanalbandbreite vorgesehen sein, wobei in jedem Übertragungskanal ein Sendespektrum sowie ggf. ein Trägersignal übertragen werden kann. Dadurch können, wie z.B. im ISO-Standard 18000-4 beschrieben, eine Vielzahl von mobilen Datenspeichern, welche sich in einem Identifikationssystem mit einem Schreib-/Lesegerät befinden, simultan ausgelesen und/oder beschrieben werden. Verschiedene Übertragungskanäle können dann je einem mobilen Datenspeicher zugeordnet werden. Diese Zuordnung kann auch zeitlich und zyklisch zur Erhöhung der Datensicherheit geändert werden.

Gemäß einer weiteren Verfahrensvariante kann in zumindest einem Übertragungskanal ggf. das zumindest eine Trägersignal sowie ein Sendespektrum mit einer zugehörigen Bandbreite gesendet werden, wobei zumindest ein Trägerpegel eines Trägersignals und zumindest ein Sendepegel eines Sendespektrums derart abgesenkt bzw. angehoben werden und die jeweilige Bandbreite eines Sendespektrums derart vergrößert bzw. verkleinert wird, so dass die gesamte Sendeleistung aller Trägersignale und aller Sendespektren in allen Übertragungskanälen annähernd gleich bleibt. Dadurch kann für jeden mobilen Datenspeicher, abhängig vom jeweiligen Abstand zum Schreib-/Lesegerät bzw. abhängig vom jeweiligen Empfangspegel, eine maximale Datenübertragungsrate realisiert werden. Übergeordnet wird die gesamte Sendeleistung, insbesondere die des Schreib-/Lesegeräts, so begrenzt, so dass nationale oder internationale funktechnische Grenzwerte erfüllt werden können.

In einer bevorzugten Verfahrensvariante kann die jeweilige Taktrate des Datenstroms und/oder der Modulationsgrad des Modulationsverfahrens stufenweise erhöht bzw. verringert werden. Durch die Beschränkung auf einige oder mehrere Stufen mit einem konstanten Übertragungsverhalten wird die Stabilität der Datenübertragung erhöht.

Die Abstandsbestimmung kann z.B. auf Basis eines Radarverfahrens mittels Aussendung und Empfang von kontinuierlichen sinusförmigen Signalen, wie z.B. mittels eines FMCW-, LFM- oder FSK-Modulationsverfahrens erfolgen. Hierzu kann z.B. zyklisch am Ende oder am Anfang eines zu übertragenden Datenpaketes eine Messung durchgeführt werden. Insbesondere ist dies bei Identifikationssystemen mit einer Datenübertragung auf Mikrowellenbasis, d.h. im GHz-Bereich, von Vorteil. Die Abstandsmessung kann somit im gleichen Frequenzbereich und mit den bereits vorhandenen Sende- und Empfangsmitteln durchgeführt werden.

Gemäß eine weiteren Verfahrensvariante können während einer Datenübertragung Steuerbefehle zur Einstellung der Taktrate des Datenstroms und/oder des Modulationsverfahrens und/oder des Kodierverfahrens zwischen dem Schreib-/Lesegerät und dem jeweiligen mobilen Datenspeicher übertragen werden. Dadurch kann z.B. nach einer Empfangspegelmessung oder nach einer Abstandsmessung eine dem Messwert entsprechende und geeignete Taktrate des Datenstroms und/oder ein geeignetes Modulationsverfahren und/oder ein geeignetes Kodierverfahren ausgewählt werden. Durch Übertragung der Steuerbefehle wird dann dem Schreib-/Lesegerät bzw. dem jeweiligen mobilen Datenspeicher mitgeteilt, dass der aktuelle Modus zu ändern ist.

Gemäß einer vorteilhaften Ausführungsform wird der kodierte Datenstrom zur Datenübertragung in Datenpakete aufgeteilt, wobei ein Datenpaket die Steuerbefehle zur Einstellung der jeweiligen Taktrate des Datenstroms und/oder des Modulationsverfahrens und/oder des Kodierverfahrens für ein nächstes zu übertragendes Datenpaket enthält. Durch die Einbindung der Steuerbefehle in ein Datenpaket ist eine vereinfachte datentechnische Verwaltung des gesamten Identifikationssystems, insbesondere mit einer Vielzahl von mobilen Datenspeichern, möglich.

Die Datenübertragung basiert vorzugsweise auf Mikrowellenbasis oder auf Basis einer berührungslosen induktiven Kopplung zwischen einem Schreib-/Lesegerät und einem mobilen Datenspeicher.

Gemäß der Erfindung ist das Datenübertragungsverfahren in einem Identifikationssystem mit einem Schreib-/Lesegerät und mindestens einem mobilen Datenspeicher zur Erfassung von gegenstandsbezogenen Zustands- und/oder Prozessdaten, insbesondere in der Automatisierungstechnik und Fertigungstechnik, verwendbar. Besonders in diesen Anwendungsbereichen sind viele Produkte, Gerätschaften sowie Transportmittel mit einem nicht unerheblichen logistischen Aufwand zu koordinieren.

Vorzugsweise wird das Identifikationssystem in einem ISM-Frequenzband betrieben, für dessen Benutzung in vorteilhafter Weise keine Gebühren anfallen. Für induktiv gekoppelte Identifikationssysteme liegt z.B. ein bevorzugtes Frequenzband bei 13,56 MHz, bevorzugte Frequenzbänder bei Mikrowellensystemen liegen bei 2,45 GHz oder 5,6 GHz.

Die Aufgabe der Erfindung wird weiterhin gelöst durch ein Schreib-/Lesegerät, welches zumindest eine Datensende- und Datenempfangseinheit, die eine Kodiereinrichtung zur Umwandlung von Schreibdaten in einen Datenstrom und einen Modulator zur Modulation des Datenstroms umfasst. Die Datensende- und Datenempfangseinheit umfasst weiter einen Demodulator zur Demodulation eines modulierten Datenstroms und eine Dekodiereinrichtung zur Umwandlung des Datenstroms in Lesedaten. Das Schreib-/Lesegerät weist zudem eine Antenne zur Abstrahlung und zum Empfang des jeweiligen modulierten Datenstroms sowie erste Messmittel zur Bestimmung des Abstands zu einem jeweiligen mobilen Datenspeicher und/oder eines jeweiligen Empfangspegels bzw. einer jeweiligen Empfangsfeldstärke auf. Eine erste Steuereinheit, welche mit der Datensende- und Datenempfangseinheit und den ersten Messmitteln verbunden ist, ist zur Durchführung des erfindungsgemäßen Verfahrens ausgebildet, indem diese die Datensende- und Datenempfangseinheit zur Änderung des Kodierverfahrens und/oder der Taktrate des kodierten Datenstroms und/oder des Modulationsverfahrens ansteuert.

Die Aufgabe wird weiterhin gelöst mit einem mobilen Datenspeicher, welcher zumindest aufweist eine Datensendeeinheit mit einer Kodiereinrichtung zur Umwandlung von Lesedaten in einen Datenstrom, mit einem Modulator zur Modulation des kodierten Datenstroms, und einer Antenne zur Abstrahlung des modulierten Datenstroms. Der mobile Datenspeicher umfasst zudem zweite Messmittel zur Bestimmung des Abstands zu einem Schreib-/Lesegerät und/oder eines Empfangspegels bzw. einer Empfangsfeldstärke sowie eine zweite Steuereinheit, welche mit der Datensendeeinheit und den zweiten Messmitteln verbunden ist. Die zweite Steuereinheit ist zur Durchführung des erfindungsgemäßen Verfahrens ausgebildet, in dem diese die Datensendeeinheit zur Änderung des Kodierverfahrens und/oder der Taktrate des Datenstroms und/oder des Modulationsverfahrens ansteuert. Derartige mobile Datenspeicher werden auch als Nur-Lese-Datenspeicher bezeichnet, da diese nicht zum Empfang und zur Speicherung von Lesedaten ausgebildet sind.

In einer weiteren Ausführungsform weist der mobile Datenspeicher auch eine Datenempfangseinheit mit einem Demodulator zur Demodulation eines von der Antenne empfangenen modulierten Datenstroms und mit einer Dekodiereinrichtung zur Umwandlung des Datenstroms in Schreibdaten auf. Die zweite Steuereinheit ist zudem mit der Datenempfangseinheit verbunden und zur Durchführung des erfindungsgemäßen Verfahrens ausgebildet, indem diese die Datenempfangseinheit zur Änderung des Kodierverfahrens und/oder der Taktrate des kodierten Datenstroms und/oder des Modulationsverfahrens ansteuert.

Schließlich wird die Aufgabe mit einem Identifikationssystem zur Erfassung von gegenstandsbezogenen Zustands- und/oder Prozessdaten gelöst, wobei das Identifikationssystem zumindest ein erfindungsgemäßes Schreib-/Lesegerät und mindestens einen erfindungsgemäßen mobilen Datenspeicher aufweist.

Die Erfindung wird an Hand der nachfolgenden Figuren näher erläutert. Dabei zeigt
- FIG 1 :: ein beispielhaftes Identifikationssystem mit einem Schreib-/Lesegerät und drei mobilen Datenspeichern, welche innerhalb eines Erfassungsbereichs Daten, insbesondere Schreib- und Lesedaten austauschen,
- FIG 2 :: ein weiteres beispielhaftes Identifikationssystem mit einem Schreib-/Lesegerät und einem mobilen Datenspeicher und mit einer Datenübertragung auf Basis von Mikrowellen. Der mobile Datenspeicher durchquert dabei den Erfassungsbereich des Schreib-/Lesegeräts,
- FIG 3 :: einen zeitlichen Verlauf des Abstands zwischen dem mobilen Datenspeicher und dem Schreib-/Lesegerät gemäß dem Beispiel von FIG 2, einen beispielhaften Emp- fangsfeldstärkeverlauf sowie gemäß der Erfindung ein davon abhängiger Verlauf der Datenübertragungsrate, und
- FIG 4 :: ein beispielhaftes Sendespektrum eines Schreib-/Lesegeräts bzw. eines mobilen Datenspeichers mit einer gemäß der Erfindung variablen einstellbaren Bandbreite und einem variablen Sendepegel.

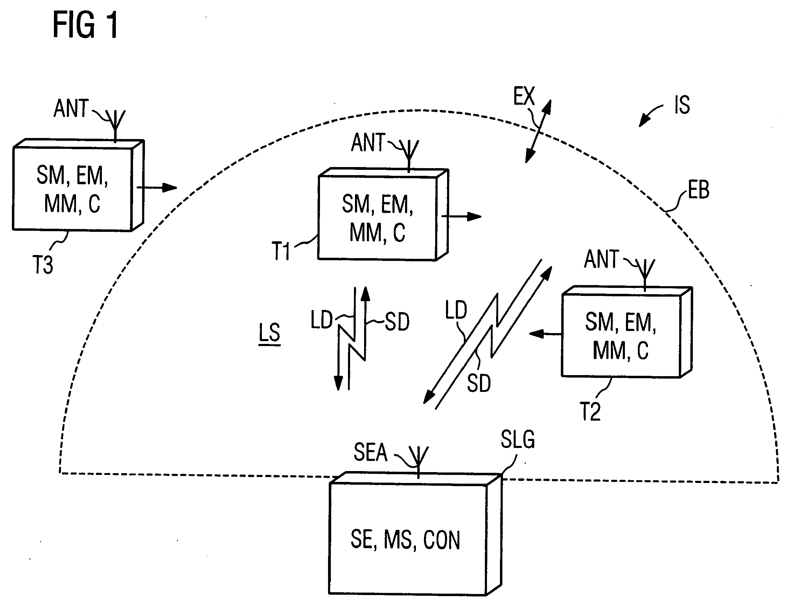

FIG 1 zeigt ein beispielhaftes Identifikationssystem IS mit einem Schreib-/Lesegerät SLG und drei mobilen Datenspeichern T1-T3, welche innerhalb eines Erfassungsbereichs EB Daten austauschen. Die Daten, welche vom Schreib-/Lesegerät SLG zu einem mobilen Datenspeicher T1-T3 übertragen werden, werden dabei als Schreibdaten SD bezeichnet; Daten, welche von einem mobilen Datenspeicher T1-T3 zum Schreib-/Lesegerät SLG übertragen werden, als Lesedaten LD. Die Daten LD, SD werden dabei über eine Luftschnittstelle LS kontakt- und berührungslos übertragen. Zur Datenübertragung weisen das Schreib-/Lesegerät SLG und ein mobiler Datenspeicher T1-T3 je eine Antenne SEA, ANT auf. Im Beispiel der Figur sind die mobilen Datenspeicher T1-T3 dazu ausgebildet, sowohl Daten LD, SD zu senden als auch zu empfangen. Die zugehörige Antenne ANT kann dabei sowohl für den Empfang und zum Senden ausgebildet sein.

Zur Durchführung des erfindungsgemäßen Verfahrens weist das Schreib-/Lesegerät SLG eine Datensende- und Datenempfangseinheit SE, Messmittel MS zur Bestimmung des Abstands zwischen dem Schreib-/Lesegerät SLG und einem jeweiligen mobilen Datenspeicher T1-T3 auf. Das Messmittel MS kann alternativ oder ergänzend auch ein Pegelmesser zur Ermittlung eines Empfangspegels oder einer Empfangsfeldstärke sein. CON bezeichnet eine erste Steuereinheit, welche zur Durchführung des erfindungsgemäßen Verfahrens die Datensende- und Datenempfangseinheit SE in geeigneter Weise ansteuert bzw. aussteuert. Die Steuereinheit kann z.B. ein Mikrocontroller sein, welcher über eine Datenverbindungsleitung oder über einen Datenbus mit der Datensende- und Datenempfangseinheit SE verbunden ist. Die Datensende- und Datenempfangseinheit SE kann z.B. einen Signalprozessor, Modulatoren, Demodulatoren, Filter etc. aufweisen. Zur Änderung des jeweiligen Kodierverfahrens oder des Modulationsverfahrens, können z.B. vom Mikrocontroller geänderte Parametersätze oder Mikroprogramme an den Signalprozessor zur Betriebsartumschaltung übertragen werden. Alle Komponenten und Funktionseinheiten CON, MS, SE können auch auf einem Mikrochip integriert sein.

In entsprechender Weise weist ein mobiler Datenspeicher T1-T3 zur Durchführung des Verfahrens entsprechende Komponenten und Funktionseinheiten SM, EM, MM, CON auf. Mit SM ist eine Datensendeeinheit bezeichnet, welche zum ausschließlichen Senden von LD zum Schreib-/Lesegerät SLG ausgebildet ist. Ein derartiger mobiler Datenspeicher T1-T3 wird auch als Nur-Lese-Datenspeicher bezeichnet. Mit EM ist eine Datenempfangseinheit bezeichnet, welche zum Empfang von Schreibdaten SD, die von einem Schreib-/Lesegerät SLG stammen, ausgebildet ist. MM bezeichnet zweite Messmittel zur Bestimmung des Abstands zwischen dem Schreib-/Lesegerät SLG und einem jeweiligen mobilen Datenspeicher T1-T3. Das zweite Messmittel MM kann alternativ oder ergänzend auch ein Pegelmesser zur Ermittlung eines Empfangspegels oder einer Empfangsfeldstärke sein. Im Falle eines induktiv gekoppelten mobilen Datenspeichers T1-T3 kann der Empfangspegel auch die an einem Energiespeicher des Datenspeicher-Eingangsschwingkreises anliegende Spannung sein. C bezeichnet eine zweite Steuereinheit, welche zur Durchführung des erfindungsgemäßen Verfahrens die Datensendeeinheit SM und ggf. die Datenempfangseinheit EM in geeigneter Weise ansteuert bzw. aussteuert oder in ihrer Betriebsart umschalten lässt.

Das Bezugszeichen EX deutet gemäß dem Beispiel eine mögliche Vergrößerung bzw. Verkleinerung des Erfassungsbereichs EB an. Wie bereits eingangs beschrieben, wird dies mittels des erfindungsgemäßen Verfahrens dadurch erreicht, dass bei gleichbleibender Sendeleistung der Pegel und die Bandbreite des Sendespektrums zu einander verändert werden.

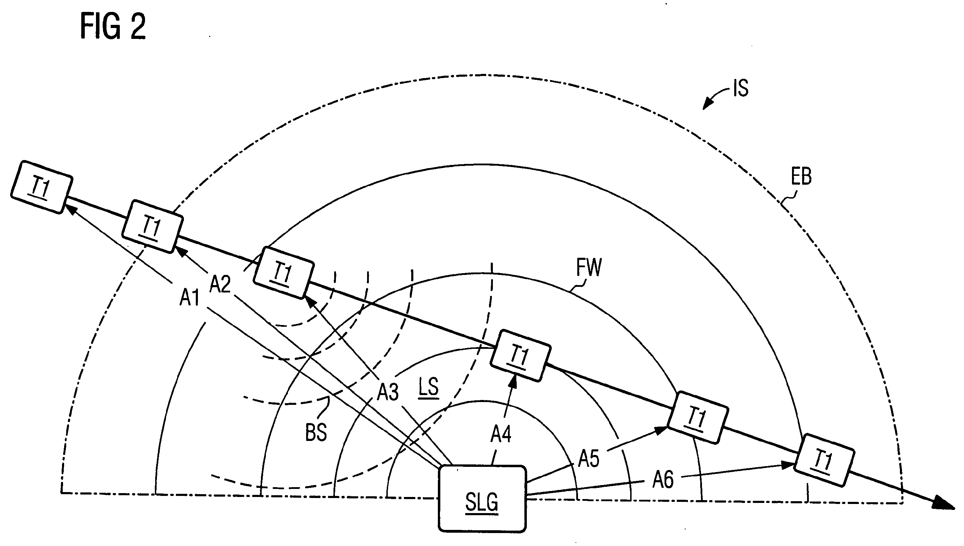

FIG 2 zeigt ein weiteres beispielhaftes Identifikationssystem IS mit einem Schreib-/Lesegerät SLG und einem mobilen Datenspeicher T1 und mit einer Datenübertragung auf Basis von Mikrowellen. Der mobile Datenspeicher T1 durchquert dabei den Erfassungsbereich EB des Schreib-/Lesegeräts SLG. Der Vorgang selbst dauert typischer weniger als eine Sekunde. Abstände A1-A6 zwischen Schreib-/Lesegerät SLG und dem mobilen Datenträger T1 sind beispielhaft in der Figur eingetragen.

Das Beispiel zeigt weiterhin den Fall eines mikrowellenbasierten Backscatter-Systems, bei welchem der mobiler Datenspeicher T1 die vom Schreib-/Lesegerät SLG ausgesandten Funkwellen FW als Backscatter-Funkwellen BS u.a. zum Schreib-/Lesegerät SLG zurückstreut. Die zurückgestreuten Backscatter-Funkwellen BS sind als gestrichelte Linien dargestellt.

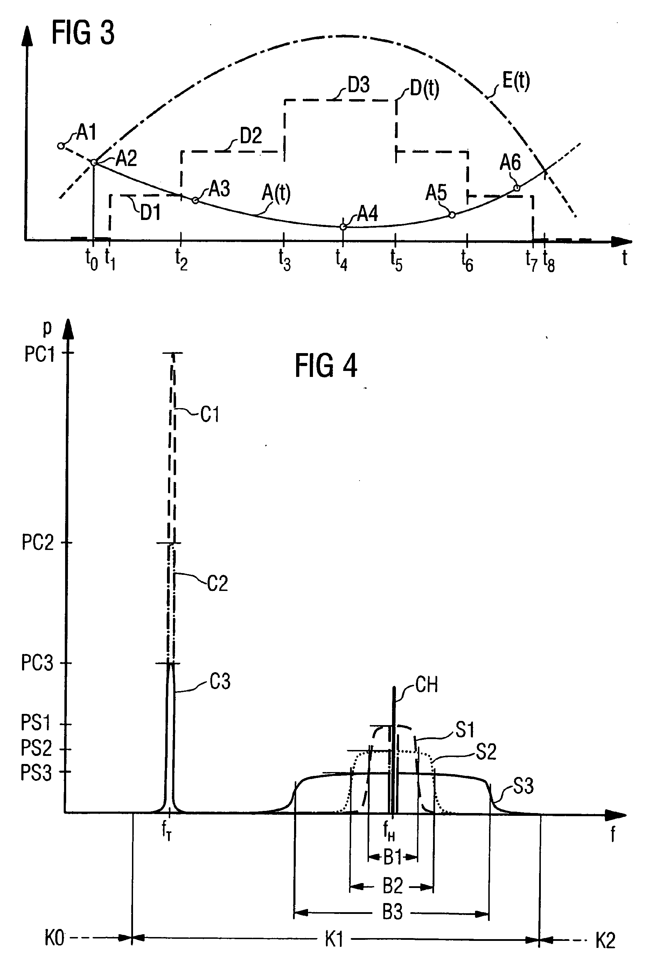

FIG 3 zeigt aufgetragen über einer Zeitachse t den zeitlichen Verlauf A(t) des Abstands A1-A6 zwischen dem mobilen Datenspeicher T1 und dem Schreib-/Lesegerät SLG gemäß dem Beispiel von FIG 2. Die Figur zeigt zudem einen beispielhaften Verlauf E(t) der elektrischen Feldstärke sowie ein davon abhängiger Verlauf D(t) der gemäß der Erfindung eingestellten Datenübertragungsrate D1-D3. Die Datenübertragungsrate D1-D3 weist zum leichteren Verständnis nur drei Stufen auf. Die Zeitpunkte t0 und t8 auf der Zeitachse t kennzeichnen den Eintritt bzw. den Austritt des mobilen Datenspeichers T1 in bzw. aus dem Erfassungsbereich EB des Schreib-/Lesegeräts SLG. Die Zeitpunkte t1-t7 korrespondieren mit Umschaltzeitpunkten zwischen den jeweiligen Datenübertragungsraten D1-D3.

Erfindungsgemäß ermittelt nun das Schreib-/Lesegerät SLG bzw. der mobile Datenspeicher T1 fortlaufend den Abstand A1-A6 zwischen diesen beiden, wie z.B. über Pegelmessung der Trägerfrequenz oder Abstandsmessung wie z.B. mittels des FMCW-Verfahrens bei Mikrowellensystemen. In Abhängigkeit vom Abstand A1-A6 wird der Sendepegel der Trägerfrequenz beim Schreib-/Lesegerät SLG mit Verringerung des Abstands A1-A6 schrittweise verringert, so dass zugleich eine schrittweise erhöhte Datenübertragungsrate D1-D3 möglich wird, ohne die eingangs genannten funktechnischen Grenzwerte zu verletzen. Entfernt sich der mobile Datenspeicher T1 während der Vorbeibewegung wieder vom Schreib-/Lesegerät SLG, so wird der Sendepegel der Trägerfrequenz wieder schrittweise erhöht, wobei die Datenübertragungsrate D1-D3 schrittweise zurückgefahren werden muss. Wie eingangs beschrieben führt gemäß der Erfindung z.B. die Erhöhung bzw. die Erniedrigung der Taktrate eines kodierten Datenstroms zu einer Verbreiterung bzw. einer Verkleinerung der Bandbreite des vom Schreib-/Lesegerät SLG ausgesandten Sendespektrums.

Zum Anzeigen eines Wechsels der Datenübertragungsrate D1-D3 können das Schreib-/Lesegerät SLG und/oder der mobile Datenspeicher T1 spezielle Steuerbefehle senden. Dies kann vorteilhaft dadurch erfolgen, dass z.B. bei Übertragung eines Datenblocks am Ende ein Code für die Datenübertragungsrate D1-D3 des nächsten Datenblocks folgt, um die Synchronisierung zwischen Schreib-/Lesegerät SLG und mobilem Datenträger T1 zu vereinfachen. Eine Erhöhung bzw. Verringerung der Datenübertragungsrate D1-D3 kann z.B. auch dadurch erreicht werden, dass ein geändertes Kodierverfahren, d.h. ein geändertes Übertragungsprotokoll, oder ein geändertes Modulationsverfahren verwendet wird, welche die Ausschöpfung der jeweiligen noch verfügbaren Restbandbreite ermöglichen. Die unterschiedlichen Taktraten für den kodierten Datenstrom können z.B. durch Teilerstufen in einer VCO-/PLL-Schaltung gewonnen werden. Derartige Schaltungen sind z.B. aus der Rundfunktechnik bekannt, mittels welcher gestufte Filterfrequenzen zur Demodulation des Antennensignals erzeugt werden.

FIG 4 zeigt ein beispielhaftes Sendespektrum S1-S3 eines Schreib-/Lesegeräts SLG bzw. eines mobilen Datenspeichers T1-T3, aufgetragen über eine Frequenzachse f, mit einer gemäß der Erfindung variablen einstellbaren Bandbreite B1-B3. Auf der Ordinatenachse sind die jeweiligen Pegel p eingetragen.

FIG 4 zeigt die zu den einstellbaren Bandbreiten B1-B3 zugehörigen Sendepegel PS1-PS3. Gemäß der Erfindung wird entsprechend der ermittelten Datenübertragungsrate D1-D3 die Bandbreite B1-B3 variabel eingestellt. Im Beispiel der Figur wird im Falle von ermittelten geringen Abständen zwischen Schreib-/Lesegerät SLG und dem jeweiligen mobilen Datenspeicher T1-T3 eine höchstmögliche Datenübertragungsrate D3 eingestellt. Das zugehörige Sendespektrum S3 weist diesbezüglich die größte Bandbreite B3 auf. In entsprechender Weise wird für Abstände am Rand des Erfassungsbereichs EB eine niedrigstmögliche Datenübertragungsrate D1 eingestellt. Das zugehörige Sendespektrum S1 weist dabei nur eine kleine Bandbreite B1 auf.

Insbesondere werden gemäß der Erfindung die Kodierverfahren, Taktraten und Modulationsverfahren so eingestellt, dass die Sendeleistung der Sendespektren S1-S3 in etwa gleich ist. Die gesamte Sendeleistung eines Sendespektrums S1-S3 entspricht dabei dem Integral der jeweiligen Einzelfrequenzen innerhalb einer Bandbreite S1-S3 multipliziert mit dem jeweiligen zugehörigen Signalpegel p.

Im Beispiel der Figur ist die gleiche Sendeleistung daraus ersichtlich, dass die jeweiligen Flächen zwischen der Hüllkurve eines Sendespektrums S1-S3 und der Frequenzachse f in etwa den gleichen Flächeninhalt aufweisen.

Weiterhin wird gemäß der Erfindung zusammen mit dem Sendespektrum S1-S3 ein Trägersignal C1-C3, insbesondere ein Hauptträgersignal, mit einem jeweiligen Trägersignalpegel PC1-PC3 übertragen. Das Trägersignal C1-C3 weist dabei eine Trägerfrequenz f_{T} auf. Das Trägersignal C1-C3 wird z.B. auch dazu verwendet, um das ursprünglich im Basisband liegende Sendespektrum in das gewünschte ISM-Frequenzband durch Modulation zu verschieben.

Insbesondere dient das Trägersignal C1-C3 bei induktiv gekoppelten Systemen zur magnetischen Energieübertragung von einem Schreib-/Lesegerät SGL zu einem mobilen Datenspeicher T1-T3. Aus diesem Grund ist der Signalpegel PC1-PC3 um Größenordnungen höher als die Sendepegel PS1-PS3 des zu übertragenden Sendespektrums S1-S3.

Erfindungsgemäß wird zumindest ein Trägersignal C1-C3 zusammen mit dem Sendespektrum S1-S3 mit der zugehörigen Bandbreite B1-B3 gesendet, wobei dann ein Trägerpegel PC1-PC3 des Trägersignals C1-C3 und der Sendepegel PS1-PS3 des Sendespektrums S1-S3 derart abgesenkt bzw. angehoben werden und die jeweilige Bandbreite B1-B3 derart vergrößert bzw. verkleinert wird, so dass die gesamte Sendeleistung des Trägersignals C1-C3 und des Sendespektrums S1-S3 annähernd gleich bleibt. Dies ist wiederum im Beispiel der Figur an dem jeweils nahezu gleichen Flächeninhalt erkennbar, welcher sich additiv aus den Flächeninhalten zwischen der Frequenzachse f und den jeweiligen Hüllkurven des Trägersignals und des Sendespektrums (C1, S1; C2, S2; C3, S3) ergeben.

Bei Backscatter-Systemen - wie eingangs beschrieben - dienen die in Figur 4 gezeigten Trägersignale C1-C3 auch zur passiven Modulation durch einen mobilen Datenspeicher T1-T3 mit Lesedaten. Dies bedeutet, dass in analoger Betrachtungsweise für weit entfernt zum Schreib-/Lesegerät SLG befindliche mobile Datenspeicher T1-T3 der größte Teil der Sendeleistung im Trägersignal C1 übertragen werden muss, um ein mit Lesedaten moduliertes und zurückgestreutes Signal überhaupt noch auswerten zu können. Entsprechend gering ist dann die noch verfügbare Bandbreite B1 des Sendespektrums S1, um auch Schreibdaten zum mobilen Datenspeicher T1-T3 zu übertragen.

Im Beispiel der Figur bilden sich zudem die Sendespektren S1-S3 als Seitenbänder um eine Hilfsträgerfrequenz f_{H} aus. Der zugehörige Hilfsträger CH wird mit einem gegenüber den jeweiligen Sendespektren S1-S3 erhöhten Sendepegel übertragen.

Dies ermöglicht empfängerseitig vorteilhaft eine einfachere Detektion des Sendespektrums S1-S3. Der Hilfsträger CH fungiert sozusagen als Pilotton.

Figur 4 zeigt schließlich gemäß der Erfindung den Ausschnitt aus einer Vielzahl von Übertragungskanälen K0-K2 mit einer gleichen Kanalbandbreite. Dabei wird in jedem Übertragungskanal K0-K2 ein Sendespektrum S1-S3 sowie ggf. ein Trägersignal C1-C3 und ggf. ein Hilfsträgersignal CH übertragen. Auf diese Weise kann vorteilhaft ein Multitag-Identifikationssystem realisiert werden, in dem zur Datenübertragung zwischen einem Schreib-/Lesegerät SLG und einem mobilen Datenspeicher T1-T3 je ein Übertragungskanal K0-K1 vorgesehen wird.

## Patentansprüche

1. Verfahren zur funkgestützten Datenübertragung zwischen einem Schreib-/Lesegerät (SLG) und mindestens einem mobilen Datenspeicher (T1-T3) in einem Identifikationssystem (IS), wobei die Daten (LD, SD) mittels eines Kodierverfahrens in einen Datenstrom kodiert werden und wobei dann der Datenstrom mittels eines Modulationsverfahrens in einem Sendespektrum (S1-S3) übertragen wird, wobei
a) der jeweilige Abstand (A1-A6) zwischen dem Schreib-/Lesegerät (SLG) und dem zumindest einen mobilen Datenspeicher (T1-T3) ermittelt wird, und dann
b) bei einer Abnahme bzw. Zunahme des jeweiligen Abstands (A1-A6) eine aktuelle Bandbreite (B1-B3) des Sendespektrums (S1-S3) erhöht bzw. verringert wird.

2. Verfahren zur funkgestützten Datenübertragung zwischen einem Schreib-/Lesegerät (SLG) und mindestens einem mobilen Datenspeicher (T1-T3) in einem Identifikationssystem (IS), wobei die Daten (LD, SD) mittels eines Kodierverfahrens in einen Datenstrom kodiert werden und wobei dann der Datenstrom mittels eines Modulationsverfahrens in einem Sendespektrum (S1-S3) übertragen wird, wobei
a) das Sendespektrum (S1-S3) empfangen und ein zugehöriger Empfangspegel ermittelt wird, und dann
b) bei einer Zunahme bzw. Abnahme des jeweiligen Empfangspegels eine aktuelle Bandbreite (B1-B3) des Sendespektrums (S1-S3) erhöht bzw. verringert wird.

3. Verfahren nach Anspruch 1 oder 2, wobei die aktuelle Bandbreite (B1-B3) des Sendespektrums (S1-S3) erhöht bzw. verringert wird, indem
a) das Kodierverfahren für die Kodierung der Daten (LD, SD) in den Datenstrom geändert wird und/oder
b) die Taktrate des kodierten Datenstroms erhöht bzw. verringert wird, und/oder
c) die Modulationsart für die Modulation des Datenstroms geändert wird.

4. Verfahren nach einem der Ansprüche 1 bis 3, wobei zugleich ein Sendepegel (PS1-PS3) des Sendespektrums (S1-S3) bei einer Vergrößerung der aktuellen Bandbreite (B1-B3) abgesenkt und bei einer Verkleinerung angehoben wird.

5. Verfahren nach Anspruch 4, wobei der Sendepegel (PS1-PS3) derart angehoben und abgesenkt wird, dass die Sendeleistung des Sendespektrums (S1-S3) annähernd gleich bleibt.

6. Verfahren nach Anspruch 5, wobei die Sendeleistung des Sendespektrums (S1-S3) auf einen vorgebbaren maximalen Wert begrenzt wird.

7. Verfahren nach einem der Ansprüche 1 bis 3, wobei zumindest ein Trägersignal (C1-C3, CH) zusammen mit dem Sendespektrum (S1-S3) mit der zugehörigen Bandbreite (B1-B3) gesendet wird, wobei dann ein Trägerpegel (PC1-PC3) des Trägersignals (C1-C3, CH) und der Sendepegel (PS1-PS3) des Sendespektrums (S1-S3) derart abgesenkt bzw. angehoben werden und die jeweilige Bandbreite (B1-B3) derart vergrößert bzw. verkleinert wird, so dass die gesamte Sendeleistung des Trägersignals (C1-C3, CH) und des Sendespektrums (S1-S3) annähernd gleich bleibt.

8. Verfahren nach Anspruch 7, wobei die Sendeleistung des Trägersignals (C1-C3, CH) und des Sendespektrums (S1-S3) auf einen vorgebbaren maximalen Wert begrenzt wird.

9. Verfahren nach einem Anspruch 7 oder 8, wobei das Trägersignal (C1-C3, CH) von einem Schreib-/Lesegerät SLG gesendet und vom jeweiligen mobilen Datenspeicher (T1-T3) mit einem Datenstrom moduliert wird.

10. Verfahren nach einem der vorangegangenen Ansprüche, wobei zur Datenübertragung in dem Identifikationssystem (IS) eine Vielzahl von Übertragungskanälen (K0-K2) mit einer gleichen Kanalbandbreite vorgesehen wird, wobei in jedem Übertragungskanal (K0-K2) ein Sendespektrum (S1-S3) sowie ggf. ein Trägersignal (C1-C3, CH) übertragen werden kann.

11. Verfahren nach Anspruch 10, wobei in zumindest einem Übertragungskanal (K0-K2) ggf. das zumindest eine Trägersignal (C1-C3, CH) sowie ein Sendespektrum (S1-S3) mit einer zugehörigen Bandbreite (B1-B3) gesendet wird, und wobei zumindest ein Trägerpegel (PC1-PC3) eines Trägersignals (C1-C3, CH) und zumindest ein Sendepegel (PS1-PS3) eines Sendespektrums (S1-S3) derart abgesenkt bzw. angehoben werden und die jeweilige Bandbreite (B1-B3) eines Sendespektrums (S1-S3) derart vergrößert bzw. verkleinert wird, so dass die gesamte Sendeleistung aller Trägersignale (C1-C3, CH) und aller Sendespektren (S1-S3) in allen Übertragungskanälen (K0-K2) annähernd gleich bleibt.

12. Verfahren nach Anspruch 11, wobei die gesamte Sendeleistung aller Trägersignale (C1-C3, CH) und aller Sendespektren (S1-S3) in allen Übertragungskanälen (K0-K2) auf einen vorgebbaren maximalen Wert begrenzt wird.

13. Verfahren nach einem der vorangegangenen Ansprüche, wobei die jeweilige Taktrate des kodierten Datenstroms und/oder der Modulationsgrad des Modulationsverfahrens stufenweise erhöht bzw. verringert wird.

14. Verfahren nach einem der vorangegangenen Ansprüche, wobei die Abstandsbestimmung auf Basis eines Radarverfahrens mittel Aussendung und Empfang von kontinuierlichen sinusförmigen Signalen, wie z.B. mittels eines FMCW-, LFM- oder FSK-Modulationsverfahrens erfolgt.

15. Verfahren nach einem der vorangegangenen Ansprüche, wobei während einer Datenübertragung Steuerbefehle zur Einstellung der Taktrate des kodierten Datenstroms und/oder des Modulationsverfahrens und/oder des Kodierverfahrens zwischen dem Schreib-/Lesegerät (SLG) und dem jeweiligen mobilen Datenspeicher (T1-T3) übertragen werden.

16. Verfahren nach Anspruch 15, wobei der kodierte Datenstrom zur Datenübertragung in Datenpakete aufgeteilt wird, wobei ein Datenpaket die Steuerbefehle zur Einstellung der jeweiligen Taktrate des kodierten Datenstroms und/oder des Modulationsverfahrens und/oder des Kodierverfahrens für ein nächstes zu übertragendes Datenpaket enthält.

17. Verfahren nach einem der vorangegangenen Ansprüche, wobei die Datenübertragung auf Basis von Mikrowellen basiert.

18. Verfahren nach einem der vorangegangenen Ansprüche, wobei die Datenübertragung auf Basis einer berührungslosen induktiven Kopplung zwischen einem Schreib-/Lesegerät (SLG) und einem mobilen Datenspeicher (T1-T3) basiert.

19. Verwendung des Verfahrens nach einem der vorangegangenen Ansprüche in einem Identifikationssystem (IS) mit einem Schreib-/Lesegerät (SLG) und mindestens einem mobilen Datenspeicher (T1-T3) zur Erfassung von gegenstandsbezogenen Zustands- und/oder Prozessdaten, insbesondere in der Automatisierungstechnik und Fertigungstechnik.

20. Verwendung des Verfahrens nach Anspruch 19, wobei das Identifikationssystem (IS) in einem ISM-Frequenzband betrieben wird.

21. Schreib-/Lesegerät (SLG), welches zumindest aufweist
a) eine Datensende- und -Datenempfangseinheit (SE) mit
a1) einer Kodiereinrichtung zur Umwandlung von Schreibdaten (SD) in einen Datenstrom, und einem Modulator zur Modulation des Datenstroms,
a2) einem Demodulator zur Demodulation eines modulierten Datenstroms und einer Dekodiereinrichtung zur Umwandlung des Datenstroms in Lesedaten (LD), und
a3) einer Antenne (SEA) zur Abstrahlung und zum Empfang des jeweiligen modulierten Datenstroms,
b) erste Messmittel (MS) zur Bestimmung des Abstands (A1-A6) zu einem jeweiligen mobilen Datenspeicher (T1-T3) und/oder eines jeweiligen Empfangspegels bzw. einer jeweiligen Empfangsfeldstärke, und
c) eine erste Steuereinheit (CON), welche mit der Datensende- und -Datenempfangseinheit (SE) und den ersten Messmitteln (MS) verbunden ist, und welche zur Durchführung des Verfahrens nach einem der Ansprüche 1 bis 18 die Datensende- und Datenempfangseinheit (SE) zur Änderung des Kodierverfahrens und/oder der Taktrate des jeweiligen kodierten Datenstroms und/oder des Modulationsverfahrens ansteuert.

22. Mobiler Datenspeicher (T1-T3), welcher zumindest aufweist
a) eine Datensendeeinheit (SM) mit einer Kodiereinrichtung zur Umwandlung von Lesedaten (LD) in einen Datenstrom, mit einem Modulator zur Modulation des kodierten Datenstroms, und einer Antenne (ANT) zur Abstrahlung des modulierten Datenstroms,
b) zweite Messmittel (MM) zur Bestimmung des Abstands (A1-A6) zu einem Schreib-/Lesegerät (SLG) und/oder eines Empfangspegels bzw. einer Empfangsfeldstärke, und
c) eine zweite Steuereinheit (C), welche mit der Datensendeeinheit (SM) und den zweiten Messmitteln (MM) verbunden ist, und welche zur Durchführung des Verfahrens nach einem der Ansprüche 1 bis 18 die Datensendeeinheit (SM) zur Änderung des Kodierverfahrens und/oder der Taktrate des jeweiligen kodierten Datenstroms und/oder des Modulationsverfahrens ansteuert.

23. Mobiler Datenspeicher (T1-T3) nach Anspruch 22, welcher aufweist
a) eine Datenempfangseinheit (EM) mit einem Demodulator zur Demodulation eines von der Antenne (ANT) empfangenen modulierten Datenstroms und mit einer Dekodiereinrichtung zur Umwandlung des Datenstroms in Schreibdaten (SD), und
b) die zweite Steuereinheit (C), welche mit der Datenempfangseinheit (EM) verbunden ist, und welche zur Durchführung des Verfahrens nach einem der Ansprüche 1 bis 18 die Datenempfangseinheit (EM) zur Änderung des Kodierverfahrens und/oder der Taktrate des jeweiligen kodierten Datenstroms und/oder des Modulationsverfahrens ansteuert.

24. Identifikationssystem (IS) zur Erfassung von gegenstandsbezogenen Zustands- und/oder Prozessdaten, mit zumindest einem Schreib-/Lesegerät (SLG) nach Anspruch 21 und mindestens einem mobilen Datenspeicher (T1-T3) nach Anspruch 22 oder 23.
